# EUROPEAN PATENT APPLICATION

(11) **EP 1 564 694 A2**
(43) Date of publication of application: **17.08.2005**
(21) Application number: 05250118.6
(22) Date of filing: 12.01.2005
(51) Int. Cl.: G07F 9/02

(54) **Vending machine**

(30) Priority: 13.01.2004 JP 2004005490; 17.11.2004 JP 2004332911
(71) Applicant: Sanden Corporation, Isesaki-shi, Gunma 372-8502 (JP)
(72) Inventor: Sato, Masaaki, c/o Sanden Corporation, Isesaki-shi, Gunma 372-8502 (JP); Tokizawa, Kuniyuki, c/o Sanden Corporation, Isesaki-shi, Gunma 372-8502 (JP); Sone, Yuji, c/o Sanden Corporation, Isesaki-shi, Gunma 372-8502 (JP); Nishio, Junichi, c/o Sanden Corporation, Isesaki-shi, Gunma 372-8502 (JP)
(74) Representative: Haley, Stephen

(57) **Abstract**

On a sales image displayed on a LCD (14) of a vending machine, there are set multiple commodity sample display areas (B1 to B30) and a commodity information display area (B33). When the sales image is displayed, if any one of reduced size commodity images (SDI) displayed in the commodity sample display areas (B1 to B30) is selected, an actual size commodity image (RSI) of the selected commodity is displayed in the commodity information display area (B33).

## Description

The present invention relates to a vending machine for selling a commodity such as a canned beverage, a bottled beverage and a plastic-bottled beverage, and in particular to a vending machine provided with a display for displaying an image on a surface to purchasers.

Among vending machines for selling a commodity such as a canned beverage, a bottled beverage and a plastic-bottled beverage, there is known a vending machine provided with a display for displaying commodity images of salable commodities on a surface to purchasers. This vending machine has a touch sensor for detecting a position which a finger has touched on a screen of the display and specifying a coordinate on the screen of the display. This vending machine determines whether or not any one of the commodity images is selected based on a detection signal from the touch sensor, and sells a selected commodity when a commodity selection was performed.

This vending machine makes it possible to more easily perform works such as exchanges or changing positions of steric commodity samples made of plastics or the like placed in a conventional vending machine by setting or changing kinds and positions of the commodity images to be displayed on the display.

And now, It is difficult to use a large-sized display as the display due to cost and designing constraints, and a standard size is considered to be around 17 inches, irrespective of the kind of the display. Furthermore, many kinds of commodities are sold by this kind of vending machine, and therefore, in the case of displaying, for example, thirty commodity images on a 17-inch display at the same time, it is necessary to display the commodity images which have been similarly reduced to 50%.

In the conventional vending machine in which commodity samples are placed, actual size commodity samples are used, and the actual size commodity samples act as visually effective commodity information sources. In the case of the vending machine in which commodity images are displayed on the display, however, it is difficult to give such visual effect as the actual size commodity samples can give because the multiple commodity images must be displayed in a reduced size.

The object of the present invention is to provide a vending machine which can give visual effect that is similar to or more than that a conventional commodity sample can give.

In order to achieve the above object, the vending machine of the present invention comprises: a display for displaying an image; a touch sensor for detecting a position on a screen of the display at which a finger has touched and specifying a coordinate position on the screen; commodity image storage means for storing commodity images each of which corresponds to each of commodities available for sale; first commodity image display means for displaying the commodity images showing the commodities available for sale in a commodity sample display area of a sales image in a reduced size; commodity selection determination means for determining whether or not any one of the commodity images displayed in the commodity sample display area is selected based on a detection signal from the touch sensor; and second commodity image display means for, when a commodity is selected, displaying a commodity image of a selected commodity in a commodity information display area of the sales image in an actual size.

According to this vending machine, when any one of reduced size commodity images displayed in the commodity sample display area on the screen is selected, a commodity image of the selected commodity is displayed in its actual size in the commodity information display area of the sales image. Thereby, it is possible to make the commodity appeal to the purchaser with the actual size commodity image.

The above and other objects, features and effects of the present invention will be apparent from the following description and accompanying drawings.

In the Drawings;
FIG. 1 is the front view of a vending machine showing an embodiment of the present invention;
FIG. 2 is a sectional view of the vending machine shown in FIG. 1;
FIG. 3 is a block diagram showing a control system configuration of the vending machine shown in FIG. 1;
FIG. 4 is a flowchart showing a flow of an operation of selling a commodity in the vending machine shown in FIG. 1;
FIG. 5 is a flowchart showing the flow of the operation of selling a commodity in the vending machine shown in FIG. 1;
FIG. 6 shows a standby image of the vending machine shown in FIG. 1;
FIG. 7 shows a sales image of the vending machine shown in FIG. 1 to be displayed before a commodity is selected;
FIG. 8 shows the sales image of the vending machine shown in FIG. 1 to be displayed after a commodity is selected;
FIG. 9 shows the sales image of the vending machine shown in FIG. 1 to be displayed after a commodity is discharged;
FIG. 10 is a flowchart showing a first method for enabling an actual size commodity image to be displayed in a commodity information display area even if an LCD with a predetermined size and resolution is exchanged with a different LCD;
FIG. 11 illustrates a specific processing method performed at step ST4 of FIG. 10;
FIG. 12 illustrates a specific processing method performed at step ST4 of FIG. 10;
FIG. 13 illustrates a specific processing method performed at step ST4 of FIG. 10;
FIG. 14 illustrates a specific processing method performed at step ST4 of FIG. 10;
FIG. 15 is a flowchart showing a second method for enabling an actual size commodity image to be displayed in a commodity information display area even if an LCD with a predetermined size and resolution is exchanged with a different LCD;
FIG. 16 illustrates a specific processing method performed at step SE5 of FIG. 15;
FIG. 17 is a flowchart showing a third method for enabling an actual size commodity image to be displayed in a commodity information display area even if an LCD with a predetermined size and resolution is exchanged with a different LCD; and
FIG.18 illustrates specific processing methods performed at steps SP2 and SP3 of FIG. 17(A).

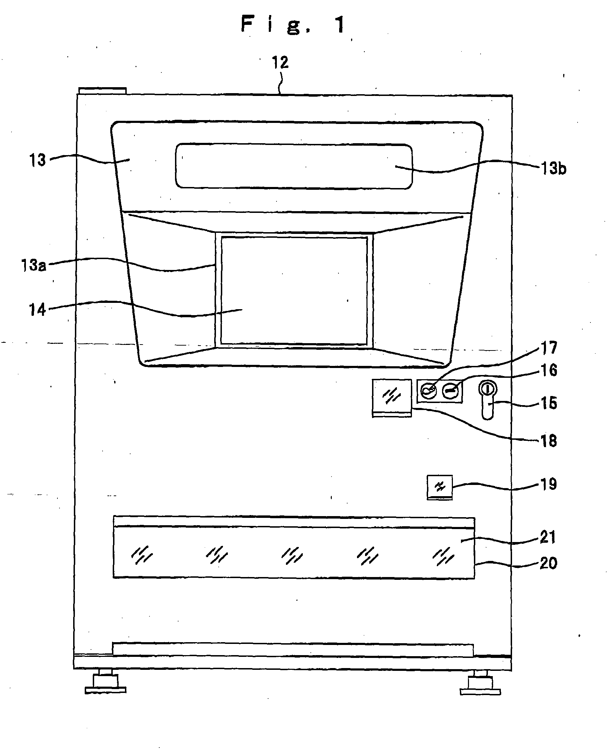

FIGS. 1 to 9 show an embodiment of the present invention.

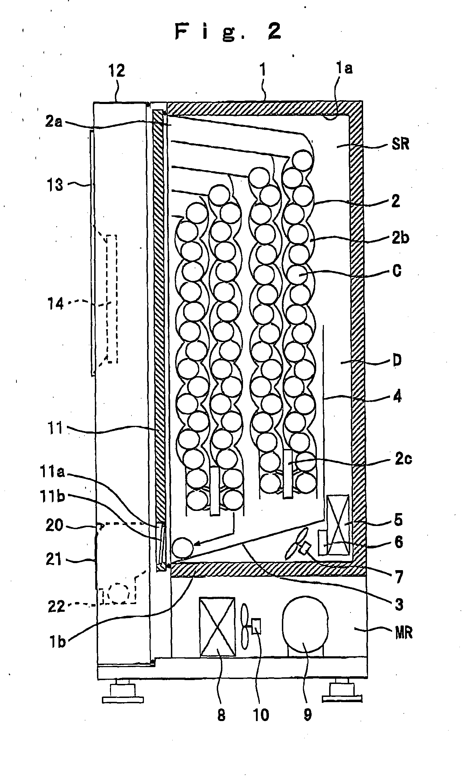

First, the structure of a vending machine will be described with reference to FIGS. 1 and 2. In the description, the front side of FIG. 1 will be assumed to be the front of the vending machine, the back side to be the back thereof, the left side to be the left thereof; and the right side to be the right thereof.

A cabinet 1 forms a box shape and is provided with a heat-insulating chamber 1a therein, the front side of which is open. The heat-insulating chamber 1a is separated by heat-insulating partition panels (not shown) horizontally arranged into multiple unit chambers SR.

In the each unit chamber SR, there is arranged a commodity storage rack 2 consisting of a serpentine-type rack. The commodity storage rack 2 has a commodity replenishment part 2a at the upper part of the front side thereof; and commodities C, such as canned beverages, bottled beverages and plastic-bottled beverages, are laid down and piled in a meandering storage passage 2b. At the lower part of the each commodity storage rack 2, there is provided a vent mechanism 2c for droppingly discharging one of the stored commodities C onto a shoot plate 3. Furthermore, in the each commodity storage rack 2 arranged in the each unit chamber SR, there is provided a sold-out detection sensor (not shown) for detecting presence/absence of the commodities C, in the each storage passage 2b. The commodity storage rack 2 is not limited to the serpentine-type rack, and it is possible to use any other type of rack capable of discharging one of the stored commodities like the serpentine-type rack.

The each unit chamber SR is provided with the shoot plate 3 and a duct plate 4. In a space provided at the lower back side of the shoot plate 3 and the duct plate 4, there are arranged an evaporator 5 among equipment constituting a refrigerator, an electric heater 6, an air blower for circulating cooling/humidifying air 7 and the like, and a space provided at the back side of the duct plate 4 is formed as a duct D. Furthermore, in the each unit chamber SR, there is provided a temperature sensor (not shown) for detecting the temperature of commodities in the commodity storage rack 2 which are to be discharged soon.

Below a bottom plate 1b of the heat-insulating chamber 1a, there is provided a machine chamber MR. In the machine chamber MR, there are arranged a condenser 8, a compressor 9, expansion means (not shown) among the equipment constituting the refrigerator, an air blower for discharging exhaust heat 10 and the like.

At the front side of the heat-insulating chamber 1a, there is provided a heat-resisting inner door 11 for openably and closably covering the front opening. At the upper, lower, left and right front edges (the lower front edge corresponds to the front edge of the bottom plate 1b) and the front edge of each partition panel of the heat-insulating chamber 1a, there are provided packings (without a reference numeral) for keeping the commodity storage chamber (each unit chamber SR) air-tight when the inner door 11 is closed. The each unit chamber SR forms a separate heat-insulating space when the inner door 11 is closed. At the lower part of the inner door 11, multiple window holes 11a are formed, each of which corresponds to the shoot plate 3 of the each unit chamber SR. The each window hole 11a is provided with a flap door 11b which is pushedly opened by a commodity C slipping down along the shoot plate 3.

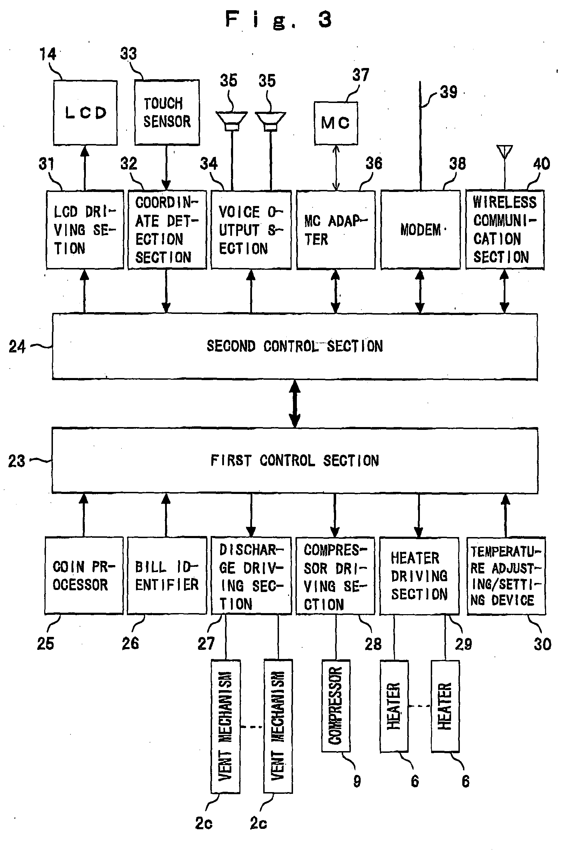

That is, in this vending machine, the each unit chamber SR forms a separate heat-insulating space, and the each unit chamber SR is separately provided with the evaporator 5 and the electric heater 6. Accordingly, it is possible to select and perform any one three modes of cooling, humidifying and non-cooling/heating for the each unit chamber SR by a temperature adjusting/setting device 30 (see FIG. 3) to be described later.

An outer door 12 is openably and closably provided at the front opening of the cabinet 1, and a dressed panel 18 is provided on the upper part of the surface of this outer door. The dressed panel 13 has a rectangular window hole 13a for exposing a screen of a liquid crystal display 14 and an advertisement section 13b for showing a product manufacturer's name, a product name and the like in characters.

The liquid crystal display (hereinafter referred to as the LCD) 14 is for displaying a still image and/or a moving image in color, and it is arranged inside the dressed panel 13 in a manner that its screen is exposed through the window hole 13a. The LCD 14 has a predetermined size and a predetermined resolution, for example, the size of 18 inches and the resolution of 1280 × 1024 pixels. Instead of this LCD 14, a well-known display, for example, a cathode ray tube (CRT) display or a plasma display panel (PDP) may be used.

The screen of the LCD 14 is provided with a touch sensor 33 (see FIG. 3) for detecting a position on the screen at which a finger has touched and specifying a coordinate position on the screen, though it is not shown in FIG. 1 and FIG. 2. In addition to a well-known electrostatic-type clear touch panel and a pressure-sensitive-type clear touch panel, it is possible to use an infrared sensor which is constituted by light generation devices and light receiving devices arranged on the upper and lower edges and the right and left edges of the rectangular frame at regular intervals, as the touch sensor 33 as appropriate.

At the front side of the outer door 12, there are arranged a lock operation lever 15, a coin insertion slot 16, a coin return lever 17, a bill insertion slot 18, a coin return port 19 and a commodity pick-up part 20 in die layout shown in FIG. 1. The lock operation lever 15 is for operating a lock mechanism (not shown) provided inside the outer door 12 and is enabled by a dedicated key. The commodity pack-up port 20 is provided with a flap door 21 which can be manually opened. Inside the flap door 21, there is provided a commodity receiving plate 22 for receiving a commodity C discharged from the flap door 11b.

Next, a control system configuration of the vending machine shown in FIGS. 1 and 2 will be now described with reference to FIG. 3.

A first control section 23 mainly controls temperature and discharge of the commodities C, and a second control section 24 mainly controls display on the LCD 14 and external data communication. Each of the control sections 23 and 24 is constituted by a computer provided with a CPU, a RAM, a ROM and the like and can mutually perform data exchange require for control. Of course, one computer may comprise the first control section 23 and the second control section 24.

To the first control section 23, there are connected a coin processor 25, a bill identifier 26, a discharge driving section 27, a compressor driving section 28, a heater driving 29 and a temperature adjusting/setting device 30. Furthermore, to the first control section 23, there are connected the sold-out detection sensor (not shown) for detecting, for the each storage passage 2b, presence/absence of the commodities C in the commodity storage rack 2 arranged in each unit chamber SR via a sold-out detection section (not shown), and the temperature sensor (not shown) for detecting the temperature of the commodities in the each unit chamber SR which are to be discharged soon via a temperature detection section (not shown).

The coin processor 25 and the bill identifier 26 are arranged inside the outer door 12. The coin processor 25 performs reality check, counting and storage of coins inserted through the coin insertion slot 16, and it sends data about the amount of the inserted coins to the first control section 23. The bill identifier 26 performs reality check and storage of a bill inserted through the bill insertion slot 18, and it sends data about the amount of the inserted bill to the first control section 23.

The discharge driving section 27 controls an operation of the vent mechanism 2c provided for the each commodity storage rack 2, more specifically, the operation of an actuator such as a solenoid used for the vent mechanism 2c, and it causes a predetermined vent mechanism 2c to operate based on a control signal from the first control section 23 to discharge a predetermined commodity.

The compressor driving section 28 controls an operation of the compressor 9 constituting the refrigerator, more specifically, the operation of a motor for driving the compressor 9, and it drives the compressor based on a control signal from the first control section 23.

The heater driving section 29 controls power distribution to the each electric heater 6, and it distributes power to a predetermined electric heater 6 based on a control signal from the first control section 23.

The temperature adjusting/setting device 30 selects any one of the three modes described above for the each unit chamber SR. It is provided with push-button switches and the like for selecting the mode, and it sends data about a selected mode to the first control section 23.

To the second control section 24, there are connected an LCD driving section 31, a coordinate detection section 32, a voice output section 34, a memory card adapter (hereinafter referred to as an MC adapter) 36, a modem 38 and a wireless communication section 40.

The LCD driving section 31 controls display on the LCD 14 provided on the outer door 12, and it drives the LCD 14 to display a predetermined image, based on image data and a control signal from the second control section 24.

The coordinate detection section 32 sends data about a coordinate of the screen to the second control section 24 based on a detection signal from the touch sensor 33. Since areas displayed on various images to be described later are set based on the coordinate on the screen of the LCD 14, it is possible to easily determine which area has been selected on the each image, from the data sent from the coordinate detection section 32 to the second control section 24.

The voice output section 34 drives speakers 35 to output a predetermined voice, based on a voice signal and a control signal from the second control section 24. At least one speaker 35 is arranged on the each side of the LCD 14 inside the outer door 12 to give stereophonic effect.

The MC adapter 36 enables a memory card (hereinafter referred to as the MC) 37 to be connected. The modem 38 is for performing data communication with an external server and the like with the use of a public tetephone line 39 and the like. The wireless communication section 40 is for performing wireless data communication with an external server and the like with the use of a mobile telephone network or a PHS network.

Image data such as still images and moving images and character data which can be displayed on the LCD 14, and voice data to be outputted from the speakers 35 can be acquired into storage means such as a hard disk provided for the second control section 24 by means of data communication via the MC 37, the modem 38 or the wireless communication section 40, and these data can be arbitrarily updated.

The image data, character data and voice data described above include display images, display characters and output voices to be provided when a standby image to be described later is displayed; display images (including multiple commodity images each of which corresponding to each of commodities available for sale), display characters and output voices to be provided when a sales image is displayed; display images, display characters and output voices to be provided when an advertisement image is displayed, display images, display characters and output voices to be provided when a campaign image is displayed; and display images, display characters and output voices to be provided when an inquiry image is displayed, the above images being to be described later.

The each of commodity images stored in the storage means of the second control section 24 is created in a size (the number of horizontal pixels × the number of vertical pixels) that enables the commodity image to be displayed in its actual size on the LCD 14 with a predetermined size and a predetermined resolution.

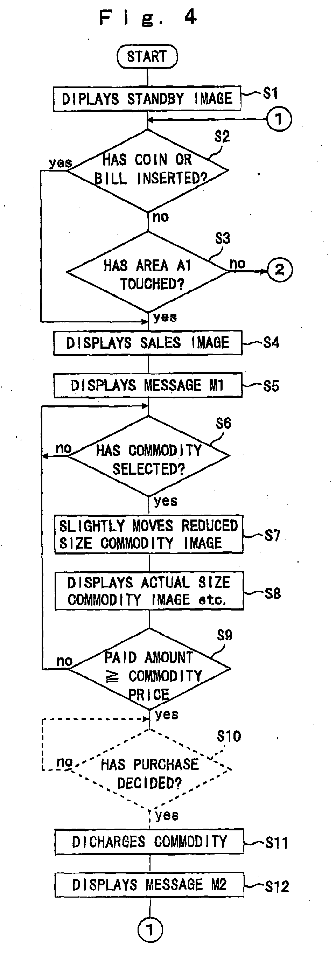

Next, an operation of selling the commodity in the vending machine shown in FIGS. 1 and 2 will be described with reference to FIGS. 4 to 9.

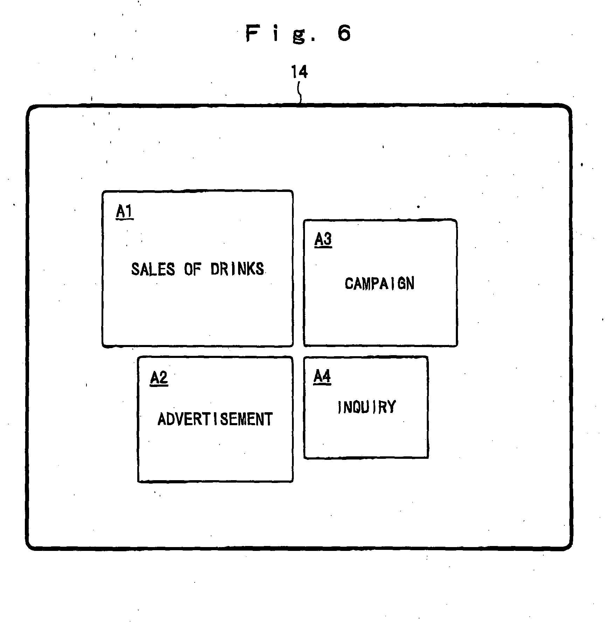

When the vending machine is powered on, the standby image shown in FIG. 6 is displayed (step S1 of FIG. 4).

The following selection areas are set on this standby image: a selection area A1 which includes "Sales of Drinks", a selection area A2 which includes "Advertisement", a selection area A3 which includes "Campaign", and a selection area A4 which includes "Inquiry". One each of the areas A1 to A4, an appropriate still image may be displayed with these words.

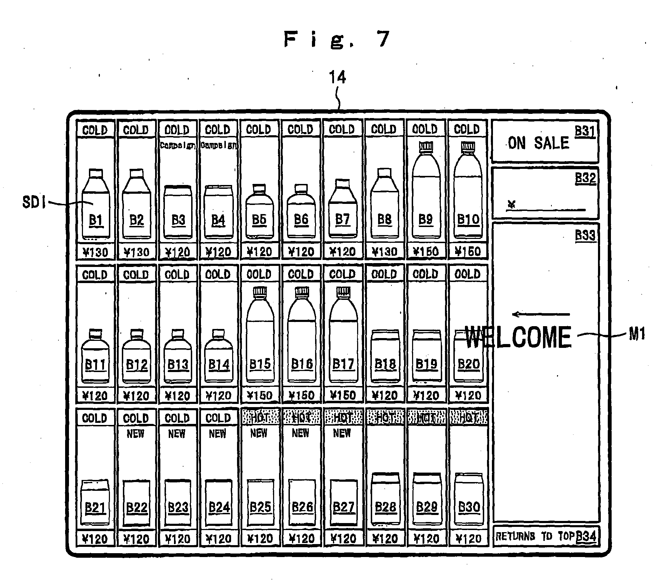

If a coin is inserted into the coin insertion slot 16 or a bill is inserted into the bill insertion slot 18 when the standby image is displayed, the standby image is switched to the sales image shown in FIG. 7 (steps S2 and S4 of FIG. 4). If a finger touches the area A1 on the standby image, the standby image is switched to the sales image shown in FIG. 7 even when a coin or a bill is not inserted (steps S3 and S4 of FIG. 4).

The following areas are set on this sales image in the layout shown in FIG. 7; a plurality of commodity sample display areas B1 to B30, an operation-state display area B31 for displaying either "On Sale" or "In Preparation", a paid-amount display area B32 for displaying the amount of coins and a bill inserted through the coin insertion slot 16 and the bill insertion slot 18, a commodity information display area B33 and a return area B34 for returning to the standby image.

At the center of each of the commodity sample display areas B1 to B30, a commodity image showing a commodity available for sale is displayed in a reduced size. This reduced size commodity image SDI is obtained by reducing a commodity image stored in the storage means of the second control section 24 to 70 to 80%.

Below the reduced size commodity image SDI displayed in each of the commodity sample image areas B1 to B30, a number indicating the commodity price is displayed. Above the reduced size commodity image SDI, a temperature control indication word, "COLD" or "HOT" is displayed, which indicates that the commodity is cooled or heated, respectively. The temperature control indication word may be displayed adjacent to the commodity price. When the temperature control indicate word is "COLD", a cold blue color is used for the temperature control indication word or the background, and when the temperature control indication word is "HOT", a warm red color is used for the temperature control indication word or the background. Between the reduced size commodity image SDI and the temperature control indication word, an icon for a new commodity or campaign can be arbitrarily set and displayed. When the commodities are being cooled or heated and the temperature thereof is not suitable for sale, words such as "Being Cooled" and "Being Heated'' can be displayed in the commodity price display area.

Now, a flow of a display setting for the commodity sample display areas B1 to B30 will be simply described. First, commodities are stored in the storage passage 2b of each commodity storage rack 2, and then commodity codes corresponding to the stored commodities are inputted by remote control capable of connecting to the first control section 23 or a handy terminal capable of wirelessly communicating with the first control section 23. Then, an operation of assigning the commodity codes to the commodity sample display areas B1 to B30 is performed. The commodity image corresponding to each commodity code is stored in the second control section 24 in advance. Accordingly, by inputting the commodity codes, the reduced size commodity image SDI and the commodity price are displayed in each of the commodity sample display areas B1 to B30. The temperature control indication word is displayed in accordance with the content set by the temperature adjusting/setting device 30. To display an icon for a new commodity, campaign and the like, a predetermined icon is selected from a group of icons prepared in advance, and then a commodity sample display area in which the icon should be displayed is selected.

When the standby image has been switched to the sales image shown in FIG. 7 as described above, a message M1 such as "Welcome" is displayed while moving vertically, horizontally or obliquely, or motionlessly for a predetermined time, for example, for 0.5 seconds, as shown in FIG. 7 (step S5 of FIG.4). When the message M1 is displayed, a voice appropriate to the message M1, may be outputted as necessary.

When the standby image is switched to the sales image in response to insertion of a coin or a bill, or when a coin or a bill is inserted after switching to the sales image, the frames of the commodity sample display areas in which the reduced size commodity images SDI of purchasable commodities are displayed or the commodity prices blink or change in its display color so that commodities purchasable with the current paid amount can be visually checked with ease. Alternatively, a processing of embossing the reduced size commodity images SDI of the purchasable commodities is performed to differentiate the purchasable commodities from unpurchasable commodities.

When the sales image is displayed, it is determined whether or not a commodity has been selected, that is, a finger has touched any one of the multiple commodity sample display areas B1 to B30 (step S6 of FIG. 4).

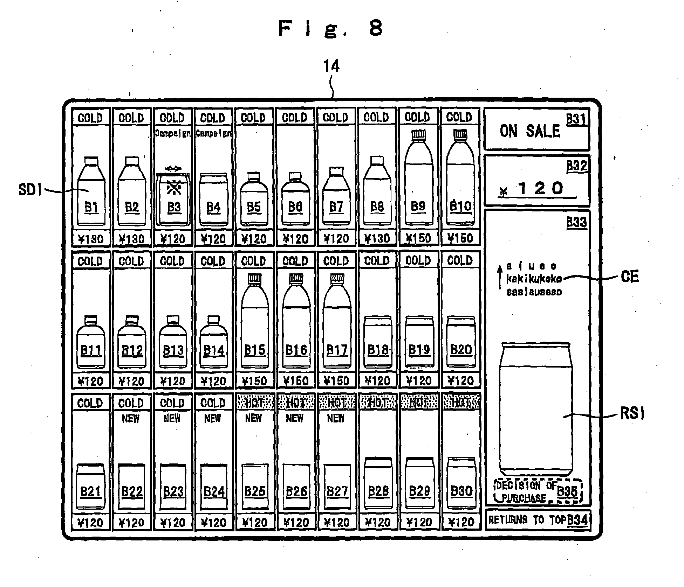

When a commodity has been selected, for example, when a finger has touched the commodity sample diplay area B3, the reduced size commodity image SDI displayed in the area B3 is slightly moved horizontally or vertically, and at the same time a sound effect is generated, as shown in FIG. 8. Thereby, the purchaser is visually and audibly notified that the predetermined commodity has been selected (step S7 of FIG. 4).

At the same time, as shows in FIG. 8, the commodity image of the selected commodity is displayed in its actual size in the commodity information display area B38 so that the commodity appeals the purchaser. As described above, the commodity images stored in the storage means of the second control section 24 are created in a size that enables the commodity images to be displayed in their actual size on the LCD 14 with the predetermined size and the predetermined resolution. Therefore, if the commodity image of the selected commodity is immediately displayed in the commodity information display area B38, it is an actual size commodity image RSI. Furthermore, a commodity description CE for the selected commodity, for example, contents, calorie, efficacy and the like are displayed in the same commodity information display area B38 while moving vertically, horizontally or obliquely, or motionlessly so that the commodity appeals to the purchaser more (step S8 of FIG. 4).

After that, it is determined whether or not the paid amount is the commodity price or above (step S9 of FIG. 4).

If it is determined at step S9 that the paid amount does not satisfy the commodity price, for example, if the paid amount is somewhat insufficient, or insertion of a coin or a bill is not performed at this stage, then the process preceeds to step S6. That is, the slight movement of the reduced size commodity image SDI performed at step S7 and the display of the actual size commodity image RSI and the commodity description CE performed at step S8 are repeatedly performed in response to the commodity selection operation until the paid amount is the commodity price or above and the commodity is selected. In other words, by arbitrarily displaying the actual size commodity image RSI and the commodity description CE of the desired commodity, the purchaser can approppriately obtain informationn related to the commodity or information required purchase decision from the display.

When the paid amount is somewhat insufficient at step S9, a message such as "The paid amount is insufficient" may be displayed while moving vertically or horizontally, or motionlessly as necessary until the paid amount reaches the commodity price.

If it is determined at step S9 that the paid amount is the commodity price or above, then the vent mechanism 2c of the commodity storage rack 2 in which the selected commodity is stored is operated to discharge the commodity (step S11 of FIG. 4).

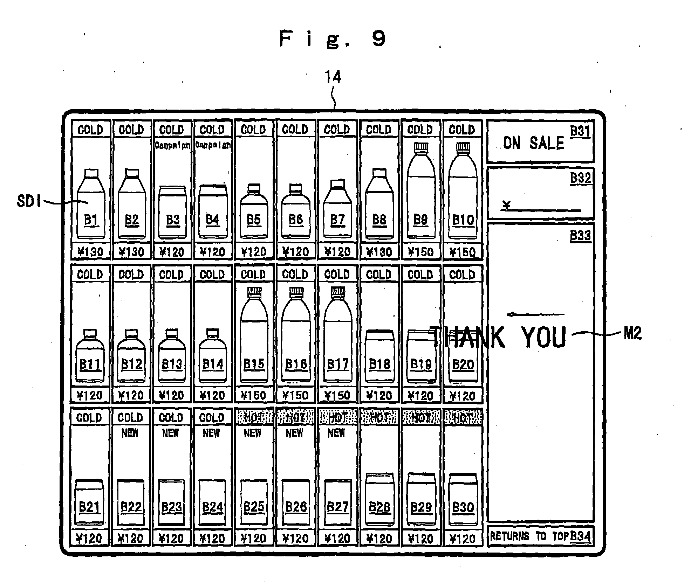

Afer the discharge of the commodity is completed, a message M2 such as "Thank you" is displayed while moving vertically, horizontally or obliquely, or motionlessly for a predetermined time, for example, for 0.5 seconds, as shown in FIG. 9 (step S12 of FIG. 4). After the display is completed, the sales image is returned to the standby image. When the message M2 is displayed, a voice appropriate to the message M2 may be outputted as necessary.

If the paid amount is the commodity price or above at step S2, it means that the discharge of the commodity at step S11 is performed in response to the first commodity selection at step S6. In this case, the slight movement of the reduced size commodity image SDI at step S7 and the display of the actual size commodity image RSI and the commodity description CE at step S8 are performed only instantaneously. If this is not desirable, a purchase decision area B35 shown by a dashed line in FIG. 8 may be displayed in the commodity information display area B38 after step S9, and step S10 of determining whether or not a purchase decision has been made, which is shown by a dashed line in FIG. 4, may be provided. Thereby, it is possible to continue display of the actual size commodity image RSI and the commodity description CE until a finger touches the purchase decision area B35 and to discharge the commodity at the timing when the finger touches the purchase decision area B35.

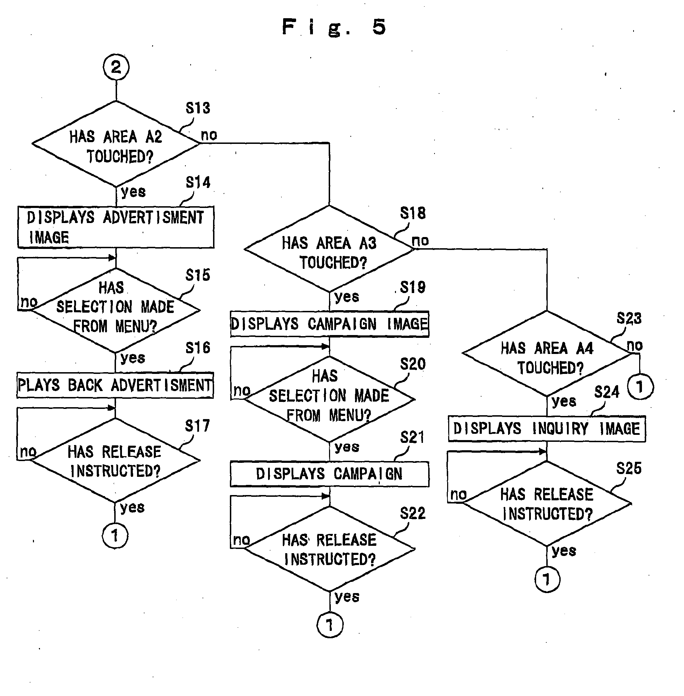

When the standby image shown in FIG. 6 is displayed, if a finger touches the area A2 on this image though a coin or a bill has not been inserted, the standby image is switched to an advertisement image (not shown) (steps S13 and S14 of FIG. 5).

On this advertisement image, one or more selection areas are set which include a still image enabling an advertisement film to be recognized. When a finger touches a predetermined selection area, the advertisement film (moving image) corresponding to the area is read from the storage means of the second control section 24, and it is played back with a voice accompanied (steps S15 and S16 of FIG. 5)

When the playback of the specified advertisement film is completed, or when a finger touches a return area set at the corner of the display image while the advertisement film being played back, the image is returned to the standby image in response to a release instruction given based thereon (step S17 of FIG. 5).

A nationally-telecast or a regionally limited advertisement film is mainly used as the above-described advertisement film. By making the displayable period of the advertisement film correspond to the period during which the film is telecast, it is possible to provide timely advertisement display. In this case, after the telecast period, the corresponding advertisement film may be automatically deleted from the storage means. It is, of course, possible to use an advertisement film related to a local region where the vending machine is installed, for example, an advertisement film of a shopping area created by the shopping area, as the advertisement film described above.

When the standby image shown in FIG. 6 is displayed, if a coin or a bill is not inserted and a finger touches the area A3 on this image, the standby image is switched to a campaign image (not shown) (steps S18 and S19 of FIG. 5).

On this campaign image, one or more selection areas are set which include a still image enabling contents of campaign to be recognized. When a finger touches a predetermined selection area, a campaign image (still image) corresponding to the area is read from the storage means of the second control section 24 and displayed. When a voice for explaining the displayed campaign accompanies, the voice is also outputted (steps S20 and S21 af FIG. 5).

When a predetermined time has elapsed after a specified campaign image is displayed, or when a finger touches a return area set at the corner of the display image while the campaign image being displayed, the image is returned to the standby image in response to a release instruction given based thereon (step S22 of FIG. 5).

As the campaign image described above, an image of explanation is used, in which it is explained with the use of an image and words that a gift may be obtained in a drawing by collecting point stickers attached to predetennined commodities during a predetermined period and sending the point stickers attached to an application sheet, or that a gift may be obtained in a drawing by sending a post card on which an answer to a quiz is written during a predetermined period. By making the displayable period of the campaign image correspond to the above-mentioned predetermined period, it is possible to provide timely campaign display. In this case, after the campaign period, the corresponding campaign image may be automatically deleted from the storage means. It is, of course, possible to use a campaign image related to a local region where the vending machine is installed, for example, a campaign image of a shopping area created by the shopping area, as the campaign image described above.

Instead of providing the above-described selection areas on the campaign image, a predetermined campaign image may be displayed when the standby image is switched to the campaign image. In this case, when a finger touches anywhere of the image on which the campaign image is displayed, the image may be returned to the standby image in response to a release instruction given based thereon. In the case where multiple campaigns are carried out, it is preferable to switchingly display the next displayable campaign image in the selection area A3 every time the image is returned to the standby image.

When the standby image shown in FIG. 6 is displayed, if a coin or a bill is not inserted and a finger touches the area A4 on this image, the standby image is switched to an inquiry image (not shown) (steps S23 and S24 of FIG. 5).

On this inquiry image, there is displayed with characters, information about where to contact in case of any failure or abnormality caused in the vending machine, more specifically, the address, name, telephone number, FAX number, and e-mail address as well as a model number for identifying the vending machine.

When a predetermined time has elapsed after the inquiry image is displayed, or when a finger touches a return area set at the corner of the inquiry image while the inquiry image being displayed, the image is returned to the standby image in response to a release instruction given based thereon (step S25 of FIG.5).

According to the vending machine described above, when the commodity is selected on the sales image, the commodity image of the selected commodity is displayed in the commodity information display area B33 of the sales image in its actual size. Thereby, it is possible to make the commodity to appeal to the purchaser with the actual size commodity image RSI and to give visual effect that is similar to or more than that a conventional commodity sample can give.

Furthermore, by displaying the commodity description CE including contents, calorie, efficacy and the like of the selected commodity together with the actual size commodity image RSI in the commodity information display area B33 of the sales image, it is possible to enhance recognition of the commodity by the purchaser by means of the commodity description CE and increase the purchaser's buying inclination.

Furthermore, the displays of the actual size commodity image RSI and the commodity description CE can be arbitrarily performed in response to the commodity selection operation until the paid amount is the commodity price or above and the commodity is selected. Thereby, it is possible to provide information related to commodity or information required for purchase decision to the purchaser by means of such displays.

Furthermore, when the commodity is selected on the sales image, the reduced size commodity image SDI of the selected commodity is slightly moved horizontally or vertically and the sound effect is generated. Thereby, it is possible to visually and audibly notify the purchaser that the predetermined commodity has been selected to confirm the selection.

Furthermore, by displaying the purchase decision area B35 in the commodity information display area B33 and continuing the displays of the actual size commodity image RSI and the commodity description CE until a finger touches the purchase decision area B35, it is possible for the purchaser to correct a wrong selection of a commodity even if the paid amount is the commodity price or above and the commodity has been selected since the display of the actual size commodity image RSI is continued until purchase is decided.

Though the sales image has been illustrated as one in the layout shown in FIG. 7 in the above description, the shape, the number and the arrangement of the commodity sample display areas B1 to B30 can be arbitrarily changed. The shape and the position of the commodity information display area B33 are not especially limited only if at least the actual size commodity image can be displayed therein.

It has been illustrated in the above description that there are stored in the storage device of the second control section 24 multiple commodity images created in the size that enables the commodity images to be displayed in their actual size on the LCD 14 with the predetermined size and resolution. However, in the case of replacing the LCD 14 with an LCD with the same resolution and a different size, in the case of replacing the LCD 14 with an LCD with the same size and a different resolution, or in the case of replacing the LCD 14 with an LCD with a different size and a different resolution, it is impossible to display the actual size commodity image RSI on the replacing LCD in the commodity information display area B33 and the visual effect given by displaying the actual size commodity image RSI cannot be obtained.

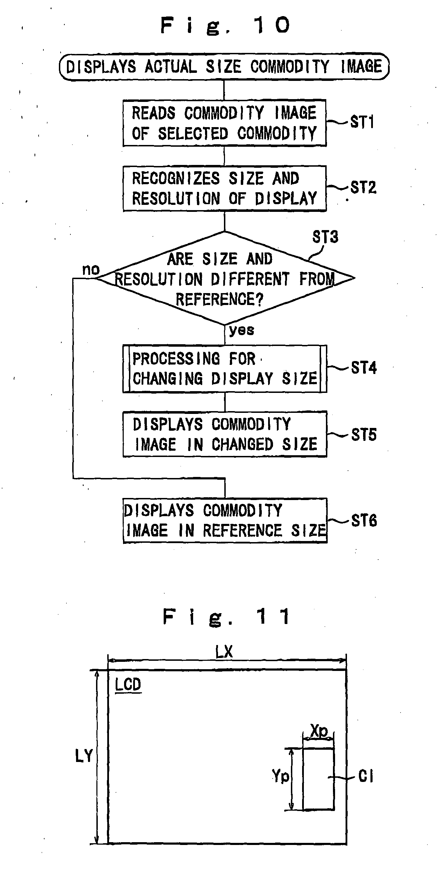

Description will be now made on first to third methods for enabling the actual size commodity image RSI to be displayed in the commodity information display B33 even when the LCD 14 with a predetermined size and resolution (hereinafter referred to as a reference size and resolution) has been replaced with a different LCD, with reference to FIGS. 10 to 18.

FIG. 10 is a flowchart showing the first method.

First, a commodity image corresponding to a seleted commodity is read from among multiple commodity images stored in the storage means of the second control section 24 (step ST1 of FIG. 10).

Then, when a size and a resolution are included in an information available from an actual LCD to the second control section 24, the size and the resolution of the actual LCD are recognized from the information. Otherwise, the size and the resolution of the actual LCD which have been manually inputted and stored in advance are read and recognized (step ST2 of FIG. 10).

It is then determined whether or not the size and the resolution of the actual LCD are different from the reference size and resolution (step ST3 of FIG. 10).

As a result of the determination, if the size and the resolution of the actual LCD are different from the reference size and resolution, then a processing for changing the display size of commodity images is performed as described below based on the size and the resolution of the actual LCD so that the commodity images can be displayed in the commodity information display area B33 in their actual size (step ST3 of FIG.10).

If the size and the resolution of the actual LCD are the same as the reference size and resolution, for example, 18 inches and 1280 × 1024 pixels, then, by immediately displaying a commodity image (the number of horizontal pixels Xps × the number of vertical pixels Yps) stored in the storage means of the second control section 24 in the commodity information display area B33, this commodity image is displayed as the actual size commodity image RSI, as described above.

However, in the case where the resolution of an actual LCD is the same as the reference resolution and its size is larger than the reference size, for example, 19 inches, 20 inches, 21 inches, 22 inches or 23 inches, if the commodity image stored in the storage means of the second control section 24 is immediately displayed in the commodity information display area B33, the size of the displayed commodity image is larger than its actual size. In the case where the resolution of an actual LCD is the same as the reference resolution and its size is smaller than the reference size, for example, 15 inches or 17 inches, if the commodity image stored in the storage means of the second control section 24 is immediately display in the commodity information display area B33, the size of the displayed commodity image is smaller than its actual size.

In this case, with the use of the horizontal dimension LXs and the vertical dimension LYs of the LCD with the reference size and the horizontal dimension LX and the vertical dimension LY of the actual LCD shown in FIG. 11, the ratio of the horizontal dimensions of both LCDs=LXs/LX and the ratio of the vertical dimensions of both LCDs=LYs/LY are calculated. Then, by determining the number of the horizontal pixels Xp of a commodity image CI to be displayed on the actual LCD from the formula of Xp = Xps (LXs/LX) and determining the number of vertical pixels Yp thereof from the formula of Yp = Yps (LYs/LY), the display size of the commodity image CI (the number of horizontal pixels Xp × the number of vertical pixels Yp) is determined.

In the case where the size of an actual LCD is the same as the reference size and its resolution is smaller than the reference resolution, for example, 640×480 pixels, 800×600 pixels or 1024×768 pixels, if the commodity image stored in the storage means of the second control section 24 is immediately displayed in the commodity information display area, the size of the displayed commodity image is larger than its actual size. In the case where the size of an actual LCD is the same as the reference size and its resolution is larger than the reference resolution, for example, 1600 × 1200 pixels, if the commodity image stored in the storage means of the second control section 24 is immediately displayed in the commodity information display area, the size of the displayed commodity image is smaller than its actual size.

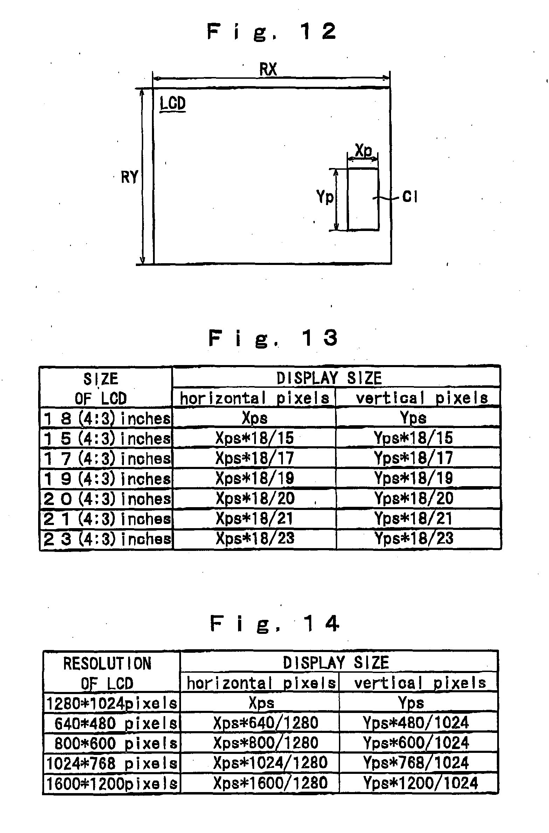

In this case, with the use of the number of the horizontal pixels RXs and the number of the vertical pixels RYs of the LCD with the reference resolution and the number of the horizontal pixels RX and the number of the vertical pixels RY of the actual LCD shown in FIG. 12, the ratio of the number of the horizontal pixels of both LCDs = RX/RXs and the ratio of the numbers of the vertical pixels of both LCDs = RY/RYs are calculated. Then, by determining the number of the horizontal pixels Xp of a commodity image CI to be displayed on the actual LCD from the formula of Xp = Xps (RX/RXs) and determining the number of the vertical pixels Yp thereof from the formula of Yp = Yps (RY/RYs), the display size of the commodity image CI (the number of horizontal pixels Xp × the number of vertical pixels Yp) is determined.

In the case where both of the size and the resolution of an actual LCD are different from the reference size and the reference resolution, respectively, the display size of the commodity image CI (the number of horizontal pixels Xp × the number of vertical pixels Yp) can be determined by sequentially performing the processing of changing the display size described with reference to FIG. 11 and the processing of changing the display size described with reference to FIG. 12.

After the display size is changed and determined, the commodity image is displayed in the commodity information display area B33 in the changed size (the number of horizontal pixels Xp × the number of vertical pixels Yp). Thereby, the actual size commodity image RSI is displayed in the commodity information display area B33 (step ST5 of FIG. 10).

In the case where the size and the resolution of an actual LCD are the same as the reference size and the reference resolution, respectively, the display size change described above is not performed, and the commodity image stored in the storage means of the second control section 24 is immediately displayed in the commodity information display area B33 (step ST6 of FIG. 10).

In the processing of changing the display size described above with reference to FIG. 11, the display size (the number of horizontal pixels Xp × the number of vertical pixels Yp) of the commodity image CI is determined from calculation based on the ratio of dimensions. However, by preparing the data table shown in FIG. 13 in advance, in which the display size (the number of horizontal pixels Xp × the number of vertical pixels Yp) of a commodity image is specified for each LCD size, and selecting and determining a commodity image display size (the number of horizontal pixels Xp × the number of vertical pixels Yp) suitable for the size of the actual LCD from the data table, it is possible to increase the processing speed since the calculation described above is not required.

In the processing of changing the display size described above with reference to FIG. 12, the display size (the number of horizontal pixels Xp × the number of vertical pixels Yp) of the commodity image CI is determined from calculation based on the ratio of the numbers of pixels. However, by preparing the data table shown in FIG. 14 in advance, in which the display size (the number of horizontal pixels Xp × the number of vertical pixels Yp) of a commodity image is specified for each LCD resolution, and selecting and determining a commodity image display size (the number of horizontal pixels Xp × the number of vertical pixels Yp) suitable for the resolution of the actual LCD from the data table, it is possible to increase the processing speed since the calculation described above is not required. The above method is not limited to a LCD with an aspect ratio of 4:3 and is applicable to the case where a LCD with an aspect ratio of 16:9 is used.

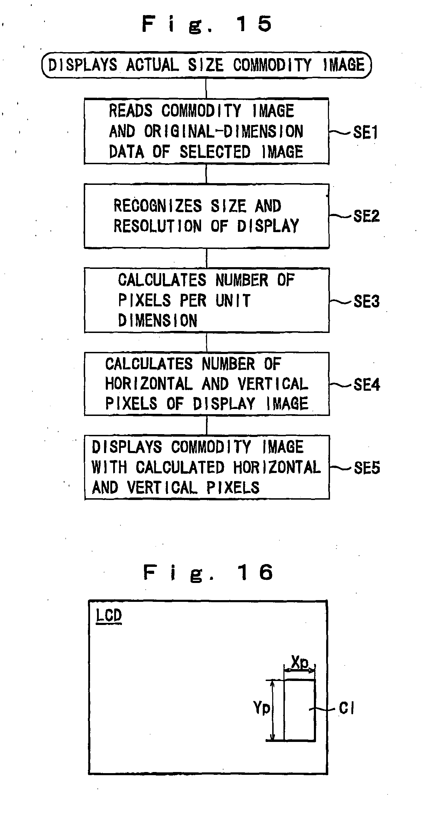

FIG. 15 is a flowchart showing the second method. In this method, each of the multiple commodity images stored in the storage means of the second control section 24 is accompanied by its original-dimension data (original-dimension data used for displaying the commodity image in its actual size).

First, a commodity image corresponding to a selected commodity and its original-dimension data are read from among the multiple commodity images stored in the storage means of the second control section 24 (step SE1 of FIG. 15).

Then, when a size and a resolution are included in an information available from an actual LCD to the second control section 24, the size and the resolution of the actual LCD are recognized from the information. Otherwise, the size and the resolution of the actual LCD which have been manually inputted and stored in advance are read and recognized (step SE2 of FIG. 15).

Then, based on the recognized size and resolution, the numbers of horizontal and vertical pixels per unit dimension on the screen of the actual LCD, for example, the number of pixels for a horizontal length of 1 cm and the number of pixels for a vertical length of 1 cm are calculated (step SE3 of FIG. 15).

Then, from the original-dimension data accompanying the commodity image corresponding to the selected ammiodity, the number of horizontal pixels Xp and the number of vertical pixels Yp required for displaying the commodity image with the original dimensions are calculated and determined (step SE4 of FIG. 15).

Then, the commodity image which has been read from the storage means of the second control section 24 is displayed on the LCD with the number of the horizontal pixels Xp and the number of the vertical pixels Yp which have been determined, as shown in FIG. 16. Accordingly, the actual size commodity image RSI is displayed in the commodity information display area B33 (step SE5 of FIG. 15).

To cite a specific case, in the case of an LCD with an aspect ratio of 4:3, a size of 20 inches and a resolution of 1280 × 1024 pixels, the number of pixels for the horizontal length of 1 cm on the LCD screen is about 32, and the number of pixels for the vertical length of 1 cm on the LCD screen is about 34. That is, in order to display such a commodity image that its original-dimension data is of horizontal 5 cm × vertical 10 cm, on the screen of this LCD in the same size, the required number of horizontal pixels is about 160 and the required number of vertical pixels is about 340. Therefore, by displaying the commodity image read from the storage means of the second control section 24 on the LCD in the size of horizontal 160 pixels × vertical 340 pixels, the actual size commodity image RSI is displayed in the commodity information display area B33.

Since this method is similarly applicable to the case where the resolution of an actual LCD is the same as the reference resolution and its size is larger than the reference size, the case where the size of an actual LCD is the same as the reference size and its resolution is smaller than the reference resolution, and the case where both the size and the resolution of an actual LCD are different from the reference size and the reference resolution, respectively, it is not required to perform a different processing for each case unlike the first method. Furthermore, this method is not limited to a LCD with an aspect ratio of 4:3 but is effective to the case where a LCD with an aspect ratio of 16:9 is used.

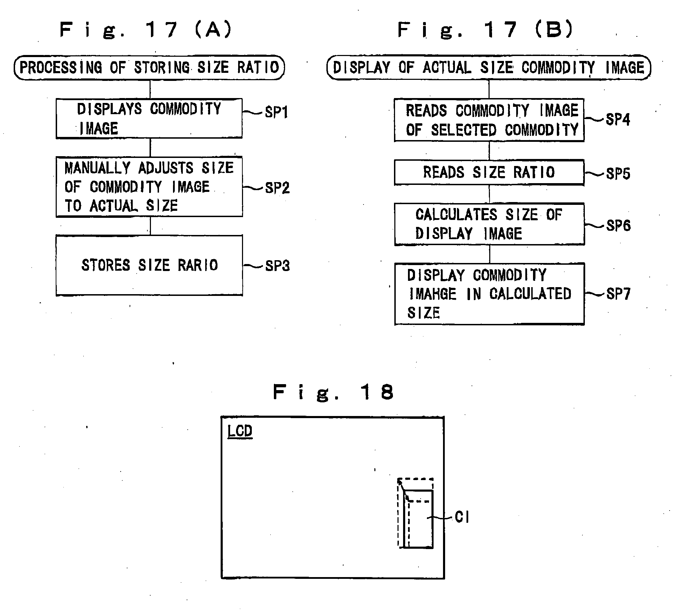

FIG. 17(A) and (B) are flowcharts showing the third method.

First, a processing of storing the size ratio is performed as a preprocessing. In this storage processing, one of the commodity images stored in the storage means of the second control section 24 is immediately displayed on the LCD 14 (step SP1 of FIG. 17(A)), and then, with the use of an image scaling function, the displayed commodity image CI is manually adjusted into its actual size on the image (step SP2 of FIG. 17(A)). Based on the number of vertical pixels and the number of horizontal pixels of the commodity image CI before adjustment and the number of vertical pixels and the number of horizontal pixels of the commodity image CI after adjustment, the size ratio of the commodity image CI before adjustment to that after adjustment (the ratio of the numbers of vertical pixels and the ratio of the numbers of horizontal pixels) is calculated and stored (step SP3 of FIG. 17(A)).

In order to display a commodity image of the selected commodity in the commodity information display area B33, a commodity image corresponding to the selected commodity is read from among the multiple commodity images stored in the storage means of the second control section 24 (step SP4 of FIG. 17(B)), and then the size ratio stored at step SP3 is read (step SP5 of FIG. 17(B)).

Then, in accordance with the read size ratio, the display size of the commodity image (the number of horizontal pixels × the number of vertical pixels) is calculated and determined (step SP6 of FIG. 13(B)). Then, the commodity image read from the storage means of the second control section 24 is displayed in the commodity information display area B33 in the determined size (the number of horizontal pixels × the number of vertical pixels). Thereby, the actual size commodity image RSI is displayed in the commodity information display area B33 (step SP7 of FIG. 18(B)).

Since this method is similarly applicable to the case where the resolution of an actual LCD is the same as the reference resolution and its size is larger than the reference size, the case where the size of an actual LCD is the same as the reference size and its resolution is smaller than the reference resolution, and the case where both the size and the resolution of an actual LCD are different from the reference size and the reference resolution, respectively, it is not required to perform a different processing for each case unlike the first method. Furthermore, this method is not limited to a LCD whith an aspect ratio of 4:3 but is effective to the case where a LCD wich an aspect ratio of 16:9 is used.

The preferable embodiments described in this specification are only illustrative and not limiting, The scope of the invention is shown by the accompanying claims, and all variations included in what the claims means are to be included in the present invention.

## Claims

1. A vending machine comprising:
a display (14) for displaying an image;
a touch sensor (33) for detecting a position on a screen of the display at which a finger has touched and specifying a coordinate position on the screen;
commodity image storage means for storing commodity images each of which corresponds to each of commodities available for sale;
first commodity image display means for displaying the commodity images (SDI) showing the commodities available for sale in a commodity sample display area (B1 to B30) of a sales image in a reduced size;
commodity selection determination means for determining whether or not any one of the commodity images displayed in the commodity sample display area is selected based on a detection signal from the touch sensor; and
second commodity image display means for, when a commodity is selected, displaying a commodity image (RSI) of a selected commodity in a commodity information display area (B33) of the sales image in an actual size.

2. The vending machine according to claim 1, wherein
the commodity images stored in the commodity image storage means are created in a size that enables the commodity images to be displayed in the actual size on the display (14) with a predetermined size and resolution.

3. The vending machine according to claim 2, further comprising:
display size change means for, when any one of a size and resolution of an actual display (14) is different from the predetermined size and resolution, changing a display size of the commodity image (RSI) so that the commodity image (RSI) is displayed in the commodity information display area (B33) in the actual size.

4. The vending machine according to claim 3, wherein
the display size change means includes; display size determination means for, when the size of the actual display (14) is different from the predetermined size, calculating a dimension ratio between a display (14) with the predetermined size and the actual display (14), and calculating and determining the display size of the commodity image (RSI) based on the dimension ratio.

5. The vending machine according to claim 3, wherein
the display size change means includes; display size determination means for, when the resolution of the actual display (14) is different from the predetermined resolution, calculating a ratio of the number of pixels between a display (14) with the predetermined resolution and the actual display (14), and calculating and determining the display size of the commodity image (RSI) based on the ratio of the number of pixels.

6. The vending machine according to claim 3, wherein
the display size change means includes: first display size determination means for, when the size of the actual display (14) is different from the predetermined size, calculating a dimension ratio between a display (14) with the predetermined size and the actual display (14), and calculating and determining the display size of the commodity image (RSI) based on the dimension ratio; and second display size determination means for, when the resolution of the actual display (14) is different from the predetermined resolution, calculating a ratio of the number of pixels between the display (14) with the predetermined resolution and the actual display (14), and calculating and determining the display size of the commodity image (RSI) based on the ratio of the number of pixels.

7. The vending machine according to claim 3, wherein
the display size change means includes; display size determination means for, when the size of the actual display (14) is different from the predetermined size, selecting and determining the display size corresponding to the actual display (14) from a group of commodity image display sizes predermined for respective display sizes.

8. The vending machine according to claim 3, wherein
the display size change means includes; display size determination means for, when the resolution of the actual display (14) is different from the predetermined resolution, selecting and determining the display size corresponding to the actual display (14) from a group of commodity image display sizes predetermined for respective display resolutions.

9. The vending machine according to claim 3, wherein
the display size change means includes: first display size determination means for, when the size of the actual display (14) is different from the predetermined size, selecting and determining the display size corresponding to the actual display (14) from a group of commodity image display sizes predetermined for respective display sizes; and second display size determination means for, when the resolution of the actual display (14) is different from the predetermined resolution, selecting and determining the display size corresponding to the actual display (14) from a group of commodity image display sizes predetermined for respective display resolutions.

10. The vending machine according to claim 3, wherein
each of the commodity images stored in the commodity image storage means is accompanied by original-dimension data; and
the display size change means includes: unit dimension calculation means for calculating the number of pixels corresponding to a unit dimension on the screen of the actual display (14); and display size determination means for calculating and determining the number of pixels required for displaying a commodity image (RSI) with its original dimensions based on the original-dimension data.

11. The vending machine according to claim 3, wherein
the display size change means includes: display size adjustment means for manually adjusting a commodity image (RSI) displayed on the screen of the display (14) to be in its actual size, on the screen; size ratio storage means for storing the ratio of the sizes before and after the adjustment; and display size determination means for calculating and determining the display size of the commodity image (RSI) based on the size ratio.

12. The vending machine according to claim 1, further comprising:
commodity description storage means for storing commodity description (CE) corresponding to each of the commodities available for sale; and
commodity description display means for, when the commodity is selected, displaying commodity description (CE) for the selected commodity in the commodity information display area (B33) of the sales image.

13. The vending machine acoording to claim 1, further comprising:
commodity image slightly moving means for, when the commodity is selected, slightly moving the commodity image (SDI) of the selected commodity displayed in the commodity sample display area (B1 to B30) of the sales image.

14. The vending machine according to claim 1, further comprising:
purchase decision area display means for, when the commodity is selected, displaying a purchase decision area (B35) on the sales image; and
commodity purchase determination means for determining whether or not the purchase decision area (B35) is specified based on the detection signal from the touch sensor (33).
